# EUROPEAN PATENT APPLICATION

(11) **EP 2 511 247 A1**
(43) Date of publication of application: **17.10.2012**
(21) Application number: 12163945.4
(22) Date of filing: 12.04.2012
(51) Int. Cl.: C04B 11/26

(54) **Method of manufacturing gypsum for the production of a gypsum molded product from gypsum board waste**

(30) Priority: 13.04.2011 JP 2011089044
(71) Applicant: Tokuyama Corporation, Shunan-shi, Yamaguchi 745-0053 (JP)
(72) Inventor: Hiranaka, Shingo, Shunan-shi, Yamaguchi 745-0053 (JP); Taga, Genji, Shunan-shi, Yamaguchi 745-0053 (JP)
(74) Representative: Albrecht, Thomas

(57) **Abstract**

A method of manufacturing hemihydrate gypsum powders for the production of a gypsum molded product from gypsum board waste, comprising at least the following two steps in a random order:
a compression step for compressing gypsum obtained from gypsum board waste; and
a baking step for converting dihydrate gypsum obtained from gypsum board waste to hemihydrate gypsum.

## Description

### TECHNICAL FIELD

The present invention relates to a method of manufacturing raw material gypsum for the production of a gypsum molded product from gypsum board waste. More specifically, it relates to a technology which enables the production of a gypsum molded product having high strength even when gypsum board waste is used as a raw material by converting dihydrate gypsum recovered from the gypsum board waste to hemihydrate gypsum or dihydrate gypsum having low oil absorption.

### BACKGROUND ART

Gypsum board waste (waste gypsum boards) totals about 1, 500, 000 tons a year in Japan. Out of these, about 500, 000 tons are end materials and remaining materials produced at the time of manufacturing gypsum boards and from the interior work of new buildings and recycled by gypsum board manufacturers. About the remaining 1, 000, 000 tons are wastes from the refurbishing and demolition works of buildings and landfilled. The total amount of the above gypsum board waste has been increasing each year, and an effective method of recycling gypsum board waste is desired from the viewpoints of landfill shortage and environmental protection.

To manufacture gypsum molded products (such as gypsum boards) from gypsum, a method comprising the following steps is generally employed. That is, dihydrate gypsum is first baked (calcined) to be converted to hemihydrate gypsum, this hemihydrate gypsum is then mixed with water to obtain slurry, and the slurry is cast into a predetermined mold form and cured as dihydrate gypsum.

When hemihydrate gypsum obtained simply by baking dihydrate gypsum (waste gypsum) recovered from gypsum board waste is mixed with water to prepare slurry, molding cannot be carried out due to insufficient fluidity with the same amount of water as that for a virgin material (by-product gypsum or natural gypsum). To provide the same level of fluidity as that of slurry of by-product gypsum or natural gypsum to the slurry of hemihydrate gypsum derived from waste gypsum, a larger amount of water is required. As a result, a gypsum molded product manufactured from waste gypsum is inferior in strength and cannot be put to practical use.

To compensate for the strength shortage of hemihydrate gypsum derived from waste gypsum, the hemihydrate gypsum may be mixed with by-product gypsum or natural gypsum. However, according to this method, for example, when a gypsum board is to be manufactured, to achieve strength specified for a gypsum board, the mixing ratio of the hemihydrate gypsum derived from waste gypsum must be about 10 mass% or less, which still causes a problem with the amount of waste gypsum to be disposed of.

To promote the recycling of waste gypsum, the inventors of the present invention have developed and proposed a large number of technologies (refer, for example, to JP-A 2006-273599, JP-A 2009-40638 and JP-A 2010-013304). These proposals disclose an excellent technical idea that enables effective use of waste gypsum. However, since these methods require the step of recrystallizing waste gypsum, a recrystallization tank and incidental equipment before and after this are required, whereby it is necessary to construct a relatively large facility to secure the profitability of this business and a large amount of initial investment is required.

### DISCLOSURE OF THE INVENTION

It is therefore an object of the present invention to provide a technology for manufacturing a reclaimed gypsum material which provides a gypsum molded product having high strength from gypsum board waste without using a bulky recrystallization tank.

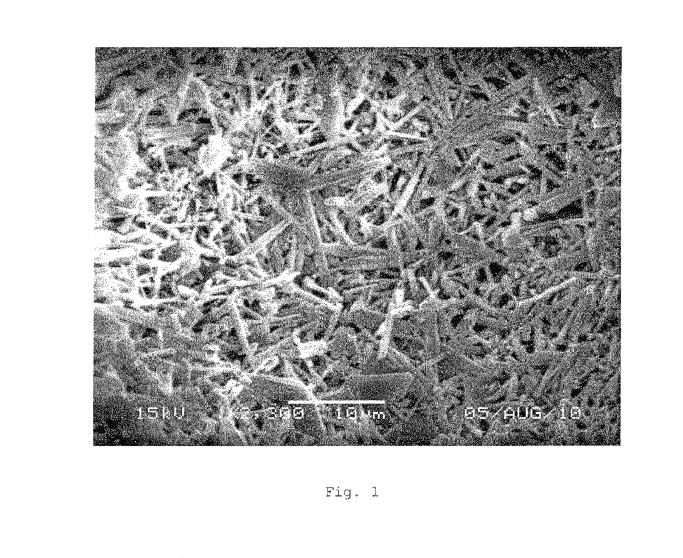

The inventors of the present invention conducted intensive studies to attain the above object. As a result, they found the cause of the fluidity shortage of hemihydrate gypsum obtained from the above waste gypsum. The waste gypsum is a porous structure having a large number of pores (see Fig. 1). Even after this porous material is pulverized or baked to obtain hemihydrate gypsum, the above porous structure is retained. Therefore, a significant amount of water added to the hemihydrate gypsum obtained from waste gypsum is absorbed into pores, thereby making it impossible to contribute to the fluidization of slurry. Therefore, when flurry is prepared by mixing hemihydrate gypsum obtained from waste gypsum with water, fluidity becomes insufficient with a normal amount of water.

The technology proposed by the inventors of the present invention in the past is concerned with a method comprising the steps of dissolving hemihydrate gypsum maintaining a porous structure to obtain an aqueous solution and recrystallizing it as dihydrate gypsum from the aqueous solution. However, according to further studies conducted by the inventors of the present invention, it was found that the porous structure of waste gypsum can be destroyed by applying mechanical stress without the chemical step of recrystallization. The present invention was accomplished based on this finding.

That is, the present invention is a method of manufacturing hemihydrate gypsum powders for the production of a gypsum molded product from gypsum board waste, comprising at least the following two steps in a random order:
a compression step for compressing gypsum obtained from gypsum board waste; and
a baking step for converting dihydrate gypsum obtained from gypsum board waste to hemihydrate gypsum.

### BRIEF DESCRIPTION OF THE DRAWINGS

Fig. 1 is an electron microphotograph (SEM) of the porous structure of waste dihydrate gypsum;
Fig. 2 is an electron microphotograph (SEM) of a porous structure after dihydrate gypsum obtained from gypsum board waste is compressed with a surface pressure of 3,000 MPa; and
Fig. 3 is a graph showing the relationship between compression pressure (application pressure) in the compression step and oil absorption.

### BEST MODE FOR CARRYING OUT THE INVENTION

The present invention will be described in detail hereinunder.

In the present invention, oil absorption is adopted as an index of the evaluation of the porous structure of gypsum. Oil absorption is measured in accordance with JIS K5101-13-1. Gypsum which has lower oil absorption more rarely has a porous structure. Therefore, even when the amount of water used to prepare slurry with this gypsum is small, the slurry has high fluidity.

The measurement of oil absorption can be carried out as follow.

Purified linseed oil is added dropwise to the gypsum and kneaded into the gypsum by means of a palette knife. The linseed oil is kneaded into the gypsum by means of the pallet knife while it is added drop by drop, and the time when the obtained paste achieves smooth hardness is taken as an end point. The measurement result is reported as the amount (mL) of linseed oil based 100 g of the gypsum sample.

The particle diameter and oil absorption of each gypsum obtained in the prior art are as follows, for example. Waste gypsum: particle diameter of about 0.5 two 5 mm, oil absorption of about 60 to 120 mL/100 g By-product gypsum: particle diameter of about 10 to 80 µm, oil absorption of about 30 to 40 mL/100 g

The above values are the measurement values of dihydrate gypsum. When these by-product dihydrate gypsums are baked to be converted to hemihydrate gypsums, the oil absorptions of these are increased by about 10 mL/100 g at maximum.

Examples of the by-product gypsum include flue-gas desulfurization gypsum, phosphogypsum, titanogypsum and salt processing gypsum.

As described above, the present invention is a method of manufacturing hemihydrate gypsum powders for the production of a gypsum molded product from gypsum board waste, comprising at least the following two steps in a random order:
a compression step for compressing gypsum obtained from gypsum board waste; and
a baking step for converting dihydrate gypsum obtained from gypsum board waste to hemihydrate gypsum.

In the present invention, dihydrate gypsum obtained from gypsum board waste may be compressed and then baked to be converted to hemihydrate gypsum, or dihydrate gypsum obtained from gypsum board waste may be baked to be converted to hemihydrate gypsum and then compressed.

Further, dihydrate gypsum which has gone only through the step of compressing dihydrate gypsum obtained from gypsum board waste may be advantageously used as a filler for the production of a gypsum molded product.

The strength of the obtained gypsum molded product can be advantageously further improved by mixing gypsum) (reclaimed gypsum) obtained by the method of the present invention with high-quality gypsum (for example by-product gypsum or natural gypsum) obtained by another method.

Examples of the gypsum board waste to which the present invention is applied include end materials and remaining materials at the time of manufacturing gypsum boards and from the interior work of new buildings and wastes from the refurbishing and demolition works of buildings.

Preferably, the gypsum board waste is used in the method of the present invention after it is suitably pulverized. That is, the gypsum board waste is generally collected while board base paper is attached to waste gypsum. The gypsum board waste in this state is suitably pulverized, preferably roughly pulverized to ensure that the maximum particle diameter of gypsum becomes about 1 to 3 mm, whereby the gypsum becomes powders having the above particle diameter whereas the board base paper maintains a relatively large paper state even through rough pulverization. Therefore, the waste gypsum and the board base paper can be easily sifted from each other by this rough pulverization, and it is possible to easily prevent paper component from being contained in the waste gypsum as a raw material. As application pressure for this rough pulverization, a maximum of several MPa of surface pressure and a maximum of several N/cm of linear pressure suffice. When the pressure for rough pulverization is made too high, the board base paper is pulverized more than necessary, thereby making it difficult to sift the waste gypsum from the board base paper. Examples of the rough pulverization method include one in which the gypsum board waste is engulfed by double screws and one in which a roll press is used.

As for the compression step, recommended compression conditions when dihydrate gypsum before baking is compressed and when hemihydrate gypsum after baking is compressed are the same. The compression means include a mold press and a roll press. When a mold press is used, pressure applied to gypsum is surface pressure and when a roll press is used, pressure applied to gypsum is linear pressure.

According to studies conducted by the inventors of the present invention, when the applied pressure is surface pressure, it is found that a reduction in oil absorption with respect to the increase of pressure up to 100 MPa is large. Therefore, pressure in the compression step is preferably 100 MPa or more, more preferably 150 MPa or more. Meanwhile, it is found that as the pressure increases, the step cost becomes higher and that when the pressure is higher than 500 MPa, a reduction in oil absorption with respect to the increase of pressure becomes not so large. Therefore, it is understood from the above finding that an application pressure of 500 MPa or less in the compression step suffices and an application pressure of 400 MPa or less suffices in most cases. In this compression step, after a predetermined pressure is reached, pressure may be released right away. Although pressurization may be continued for a long time, oil absorption does not decrease more thereby.

When pressure applied in the compression step is linear pressure, from the same point of view as above, it is preferably 20 kN/cm or more, more preferably 20 to 100 kN/cm, much more preferably 40 to 80 kN/cm.

When the compression step is carried out by using a mold press, a hydraulic press is preferably used. In the case of a roll press, a briquetting machine or a roller compactor is used.

The above compression step may be carried out only once or a plurality of times.

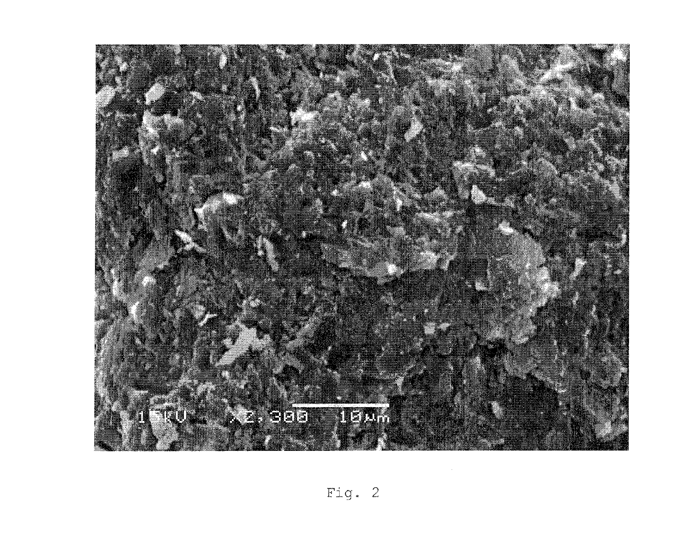

For your reference, an electron microphotograph (SEM) of a porous structure after dihydrate gypsum obtained from gypsum board waste is compressed with a surface pressure of 3,000 MPa is shown in Fig. 2.

The baking step for baking dihydrate gypsum which is obtained from gypsum board waste and has gone or has not gone through the compression step to convert it to hemihydrate gypsum may be carried out by a known method. Stated more specifically, the baking step can be carried out by heating at a temperature of preferably 100 to 200°C, more preferably 110 to 160°C for preferably 10 to 180 minutes, more preferably 20 to 90 minutes. Air is good enough for the ambient atmosphere at the time of baking. This heat treatment may be carried out in a suitable device, for example, a hot air drier or a conductive electric heat drier.

As describes above, the method of the present invention may be carried out by compressing dihydrate gypsum obtained front gypsum board waste and then baking it to convert it to hemihydrate gypsum, or by baking dihydrate gypsum obtained from gypsum board waste to convert it to hemihydrate gypsum and then compressing it.

Hemihydrate gypsum having an oil absorption of 65 mL/100 g or less can be manufactured from gypsum board waste by the above method of the present invention. The oil absorption of the hemihydrate gypsum manufactured by the method of the present invention can be adjusted to 50 mL/100 g or less, further 40 mL/100 g or less by selecting application pressure in the above compression step. On the other hand, it is extremely difficult to adjust the oil absorption to 25 mL/100 g or less and cost required for the compression step may become enormous. In consideration, of strength required for general gypsum molded products, the oil absorption is preferably adjusted to about 30 mL/100 g because the method of the present invention can be carried out at a low cost.

The optimum value of strength required for gypsum molded products and the optimum value of the fluidity of slurry at the time of molding differ according to application purpose. Taking a gypsum board which is in greatest demand as an example, to obtain both the strength of a gypsum board after molding and the sufficiently high fluidity of slurry, the hemihydrate gypsum must have an oil absorption of about 50 my/100 g or less, preferably 25 to 40 mL/100 g.

As described above, with the method of the present invention, it is possible to manufacture hemihydrate gypsum having an oil absorption of 50 ML/100 g or less, specifically 25 to 40 mL/100 g from gypsum board waste by raising application pressure in the compression step extremely high. However, when application pressure is made high, cost in the compression step increases exponentially disadvantageously.

The further fiction of even gypsum having oil absorption which can be used for desired purpose by the method of the present invention is preferred from the viewpoint of the quality of a gypsum molded product of interest.

Therefore, it is realistic that reclaimed gypsum whose oil absorption has been reduced to a certain value by the method of the present invention should be mixed with gypsum having lower oil absorption obtained by another method to adjust the oil absorption to the above range before use. When such a mixture is used, any one of the following two mixing methods comprising the following steps is preferably employed.

The first mixing method comprises at least the following three steps in the mentioned order:
(1) a compression step for compressing dihydrate gypsum obtained from gypsum board waste;
(2) a mixing step for mixing the above dihydrate gypsum after compression with dihydrate gypsum, having an oil absorption measured in accordance with JIS K5101-13-1 of 40 mL/100 g or less; and
(3) a baking step for converting the dihydrate gypsum mixture to hemihydrate gypsum.

The second mixing method comprises at least the following three steps in the mentioned order;
(1) a baking step for converting dihydrate gypsum obtained from gypsum board waste to hemihydrate gypsum;
(2) a compression step for compressing the hemihydrate gypsum after baking;
(3) a mixing step for mixing the hemihydrate gypsum after compression with hemihydrate gypsum having an oil absorption measured in accordance with JIS K5101-13-1 of 50 mL/100 g or less.

In the above first mixing method, the oil absorption of the dihydrate gypsum which has gone through the compression step is preferably 45 mL/100 g or less, more preferably 35 to 45 mL/100 g. Meanwhile, in the above second mixing step, the oil absorption of the hemihydrate gypsum after baking and compression is preferably 65 mL/100 g or less, more preferably 50 to 65 mL/100 g.

Although application pressure required, to achieve the above oil absorption in the compression step slightly differs according to the type of gypsum board waste used as a raw material, a person skilled in the art can easily know it within the above preferred range by conducting only a few preliminary experiments. For example, in the case of waste gypsum used in Examples which will be described hereinafter, the above oil absorption can be achieved by setting application pressure in the compression step to a surface pressure of preferably 140 MPa or more, more preferably 140 to 300 MPa.

Baking conditions when dihydrate gypsum after mixing is converted to hemihydrate gypsum in the above first mixing method, and when dihydrate gypsum obtained from gypsum board waste is converter, to hemihydrate gypsum in the second mixing method are the same as those explained for the baking step when a gypsum mixture is not used.

The dihydrate gypsum having an oil absorption of 40 mL/100 g or less used in the above first mixing method is preferably by-product gypsum or natural gypsum. Examples of the above by-product gypsum include flue-gals desulfurization gypsum, phosphogypsum, titanogypsum and salt processing gypsum. The by-product gypsum and the natural gypsum have an oil absorption of 40 mL/100 g or less, generally 35 mL/100 g or less, typically 30 to 33 mL/100 g.

The hemihydrate gypsum having an oil absorption of 50 mL/100 g or less and used in the second mixing method is preferably hemihydrate gypsum obtained by baking by-product gypsum or natural gypsum and used in the above first mixing method. The oil absorption of this hemihydrate gypsum is preferably 45 mL/100 g or less, more preferably 30 to 40 mL/100 g.

In all of the first mixing method and the second mixing method, the ratio of gypsum which has gone through the compression step is preferably 5 to 50 mass%, more preferably 25 to 40 mass% based on the total amount of the gypsum mixture. By setting the above mixing ratio, the oil absorption of the obtained gypsum mixture powders can be set to 50 mL/100 g or less as hemihydrate gypsum and therefore both the strength of the obtained gypsum molded product and the fluidity of the slurry can be obtained. It is recommended to compare the above mixing ratio with the mixing ratio of reclaimed gypsum by the prior art which is 10 mass% at most.

The particle diameter of gypsum manufactured by the method of the present invention can be suitably set according to the application purpose of a gypsum molded product. For example, when the above gypsum is used as a raw material for gypsum boards, the 50% volume cumulative diameter measured by the particle grain size distribution meter of laser diffraction scattering system is preferably set to 10 to 80 µm. To set the particle diameter to this range, a suitable pulverizer such as a ball mill may be used.

Hemihydrate gypsum manufactured by the method of the present invention may be advantageously used as raw material gypsum for the production of a gypsum molded product. Dihydrate gypsum which has gone only through the compression step for compressing dihydrate gypsum obtained from gypsum board waste can also be advantageously used for the production of a gypsum molded product.

Examples of the above gypsum molded product include gypsum boards, mold materials for ceramics and porcelain and cast molds for the casting of metals.

### Examples

The following examples are provided for the purpose of further illustrating the present invention but are in no way to be taken as limiting.

The average particle diameter and oil absorption of gypsum and the bending strength of a molded product in the following examples and comparative examples were measured as follows.

### Average particle diameter of gypsum

The average particle diameter of gypsum is a 50 % volume cumulative diameter measured by means of the grain size distribution meter of laser diffraction scattering system.

### Oil absorption of gypsum

The oil absorption of gypsum was measured in accordance with JIS K5101-13-1.

10 g of gypsum was weighed accurately, and purified linseed oil was added dropwise to the gypsum and kneaded into the gypsum by means of a palette knife. The linseed oil was kneaded into the gypsum by means of the pallet knife while it was added drop by drop, and the time when the obtained paste achieved smooth hardness was taken as an end point. The measurement result shows the amount (mL) of linseed oil based on 100 g of the gypsum sample.

### Bending strength of molded product

The bending strength of a molded product was measured in accordance with JIS A6904.

A predetermined amount of hemihydrate gypsum and a predetermined amount of water were mixed together under agitation to prepare flurry which was then poured into a mold form measuring 40 mm x 40 mm x 160 mm and left to stand at room temperature for 24 hours. Then, the slurry, was dried in a drier at 40°C. The measurement was made on a molded product as a sample which had a weight change of 0.2 g or less per 6 hours when it was kept dried in a drier at 40°C.

The sample was placed on two support rollers (diameter of 10 mm) arranged parallel to each other in the axial direction at the same height at an interval of 10 mm, and a downward load was applied to the top surface of the above sample by a loading roller (diameter of 10 mm) which was arranged parallel to the above support rollers in the axial direction to find the maximum load until the sample was destroyed. This maximum load was taken as bending strength.

### Reference Example 1

In this reference Example, flue-gas desulfurization gypsum having an average particle diameter of 45 µm was used as a typical example of by-product dihydrate gypsum. The by-product flue-gas desulfurization gypsum had an oil absorption of 33 mL/100 g.

After the above flue-gas desulfurization gypsum was baked at 130°C for 2 hours to be converted to hemihydrate gypsum, this hemihydrate gypsum was pulverized to an average particle diameter of 10 µm by means of a ball mill. The oil absorption of this hemihydrate gypsum after pulverization was 37 mL/100 g.

The bending strength of a molded product formed by mixing together 50 parts by mass of the hemihydrate gypsum derived from the above flue-gas desulfurization gypsum and 50 parts by mass of water was 2.2 N/mm².

The waste gypsum used as a raw material in the following examples and comparative examples was sifted waste gypsum (dihydrate gypsum) obtained by putting roughly pulverized gypsum board waste through a sieve having an opening of 3 mm and separating and removing board base paper on the sieve. The oil absorption of this raw material waste gypsum was 90 mL/100 g.

### Example 1

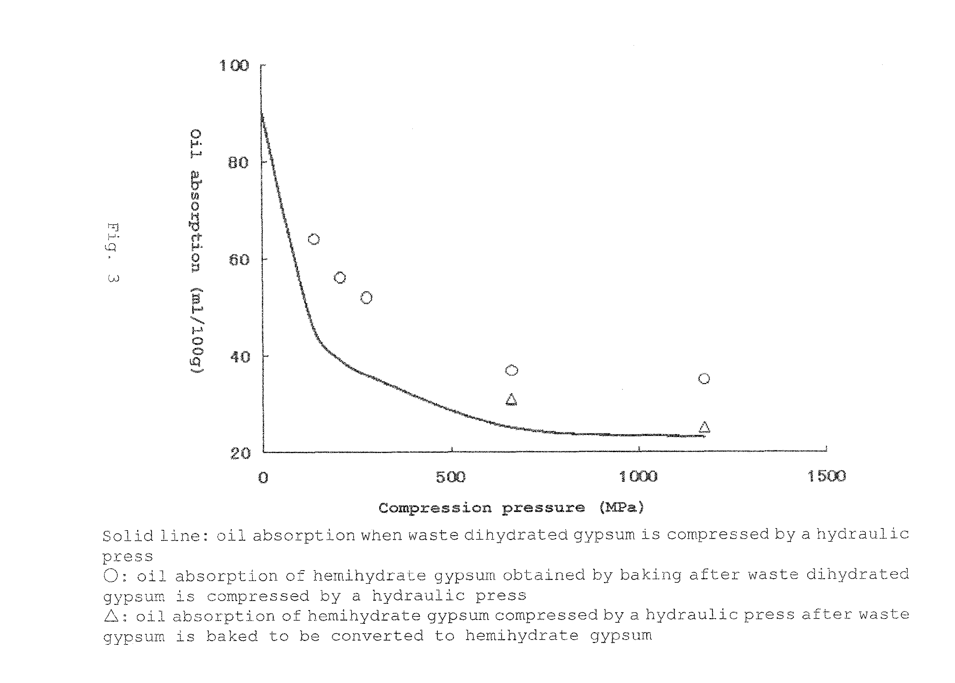

In this example, after the compression step for applying surface pressure to the raw material waste gypsum (dihydrate gypsum) to compress it, the baking step for baking the dihydrate gypsum after compression to convert it to hemihydrate gypsum was carried out. The oil absorption measured after each step when application pressure was changed is shown in Table 1 and Fig. 3.

The experiment was conducted as follows.

First, the raw material waste gypsum was filled into a polyvinyl chloride ring having an inner diameter of 31 mm and a height of 15 mm and compressed with surface pressure as a variable by using a hydraulic press, the waste gypsum after compression was roughly pulverized, and a predetermined amount of gypsum passing through a sieve having an opening of 1 mm was obtained to terminate the compression step. A small amount of the waste gypsum after this compression step was sampled to measure its oil absorption.

Then, the waste gypsum after the above compression step was roughly pulverized, let pass through a sieve having an opening of 1 mm and baked at 130 °C for 2 hours to be converted to hemihydrate gypsum so as to measure its oil absorption.

**Table 1**

| Surface pressure | Oil absorption of dihydrate gypsum after compression step | Oil absorption of hemihydrate gypsum after baking step |
|---|---|---|
| (MPa) | (mL/100g) | (mL/100g) |
| 0 | 90 | Not measured |
| 69 | 65 | Not measured |
| 138 | 45 | 64 |
| 206 | 39 | 56 |
| 275 | 36 | 52 |
| 661 | 25 | 37 |
| 1174 | 23 | 35 |

The numerical values in the surface pressure column in Table 1 are maximum pressure values applied to the waste gypsum by means of a hydraulic press.

With reference to Table 1 and Fig. 3, a reduction in oil absorption with respect to the increase of pressure is large until pressure in the compression step reaches about 100 MPa. However, it is understood that when the pressure exceeds 500 MPa, a reduction in oil absorption with respect to the increase of pressure is not so large.

As understood from Table 1, when dihydrate gypsum after compression is baked to be converted to hemihydrate gypsum, its oil absorption becomes 1.4 to 1.5 times higher than that of dihydrate gypsum before baking (in Fig. 3, the oil absorption changes from the solid line to O at the same position on the abscissa axis). The change rate of the oil absorption of gypsum which has gone through the above baking step is a change rate for gypsum which has gone through the compression step in the method of the present invention and differs from the change rate of oil absorption when by-product dihydrate gypsum is baked to be converted to hemihydrate gypsum.

### Example 2

In this example, after the baking step for baking raw material waste gypsum (dihydrate gypsum) to convert it to hemihydrate gypsum, the compression step for applying surface pressure to the hemihydrate gypsum after baking to compress it was carried out.

The raw material waste gypsum was first baked at 130°C for 2 hours to be converted to hemihydrate gypsum to terminate the baking step.

Thereafter, the hemihydrate gypsum after the above baking step was filled into a polyvinyl chloride ring having an inner diameter of 31 mm and a height of 15 mm and compressed with a surface pressure of about 660 MPa by using a hydraulic press to terminate the compression step. Then, the waste gypsum after compression was roughly pulverized and a predetermined amount of gypsum passing through a sieve having an opening of 1 mm was obtained as a sample for the measurement of oil absorption.

The measured oil absorption of the obtained gypsum is represented by Δ in Fig. 3.

When the baking step is first carried out to convert the waste gypsum to hemihydrate gypsum, the oil absorption decreases in the subsequent compression step. Therefore, the compression step should be carried out by applying pressure at which desired oil absorption is obtained.

### Example 3

Raw material waste gypsum was filled into a polyvinyl chloride ring having an inner diameter of 31 mm and a height of 15 mm and compressed with a surface pressure of 280 MPa. The waste gypsum after compression was roughly pulverized, and a predetermined amount of gypsum passing through a sieve having an opening of 1 mm was obtained. The oil absorption of the waste gypsum after compression and pulverization was 36 mL/100 g.

50 parts by mass of the waste gypsum after compression and pulverization and 50 parts by mass of flue-gas desulfurization gypsum were mixed together and baked at 130°C for 2 hours to be converted to hemihydrate gypsum which was then pulverized to an average particle diameter of 10 µm by means of a ball mill. The oil absorption of this hemihydrate gypsum after pulverization was 38 mL/100 g.

The bending strength of a molded product formed by mixing together 50 parts by mass of the above hemihydrate gypsum after pulverization and 50 parts by mass of water was 2.2 N/mm².

### Example 4

Raw material waste gypsum was filled into a polyvinyl chloride ring having an inner diameter of 31 mm and a height of 15 mm and compressed with a surface pressure of 1,200 MPa. The waste gypsum after compression was roughly pulverizer, and a predetermined amount of gypsum passing through a sieve having an opening of 1 mm was obtained. The oil absorption of the waste gypsum after compression and pulverization was 22 mL/100 g.

The waste gypsum after compression and pulverization was baked at 130 °C for 2 hours to be converted to hemihydrate gypsum which was then pulverized to an average particle diameter of 10 µm by means of a ball mill. The oil absorption of this hemihydrate gypsum after pulverization was 37 mL/100 g.

The bending strength of a molded product formed by mixing together 50 parts by mass of the above hemihydrate gypsum after pulverization and 50 parts by mass of water was 2.2 N/mm².

### Example 5

Raw material waste gypsum was compression molded with a roll support pressure of 40 kN/cm in terms of linear pressure by using a briquetting machine (K-205 of Furukawa Industrial Machinery Systems Co., Ltd.). The roll had a diameter of 520 mm, a width of 120 mm and an almond-like pocket measuring 37 mm x 21 mm.

The waste gypsum after compression molding was roughly pulverized by means of a pulverizer until it passed through a sieve having an opening of 7 mm. The obtained powders were baked at 130°C for 2 hours to be converted to hemihydrate gypsum which was then pulverized to an average particle diameter of 16 µm by means of a ball mill. The oil absorption of the hemihydrate gypsum after pulverization was 45 mL/100 g.

60 parts by mass of the hemihydrate gypsum after pulverization and 40 parts by mass of hemihydrate gypsum obtained by baking flue-gas desulfurization gypsum at 130 °C for 2 hours were mixed together and pulverized to an average particle diameter of 12 µm by means of a ball mill. The oil absorption of this hemihydrate gypsum mixture after pulverization was 36 my/100 g.

The bending strength of a molded product formed by mixing together 50 parts by mass of the hemihydrate gypsum mixture after pulverization and 50 parts by mass of water was 2.3 N/mm².

### Example 6

Raw material waste gypsum was compression molded with a roll support pressure of 80 kN/cm in terns of linear pressure by using the briquetting machine used in Example 5.

The waste gypsum after compression molding was roughly pulverized by means of a pulverizer until it passed through a sieve having an opening of 7 mm. The obtained powders were baked at 130°C for 2 hours to be converted to hemihydrate gypsum which was then pulverized to an average particle diameter of 12 µm by means of a ball mill. The oil absorption of this hemihydrate gypsum after pulverization was 38 mL/100 g.

The bending strength of a molded product formed by mixing together 50 parts by mass of the hemihydrate gypsum after pulverization and 50 parts by mass of water was 2.3 N/mm².

### Comparative Example 1

Raw material waste gypsum was baked at 130 °C for 2 hours to be converted to hemihydrate gypsum which was then pulverized to an average particle diameter of 10 µm by means of a ball mill. The oil absorption of this hemihydrate gypsum after pulverization was 115 mL/100 g.

Although a molded product was to be formed by mixing together 50 parts by mass of the hemihydrate gypsum after pulverization and 50 parts by mass of water, the fluidity of slurry was insufficient and molding was impossible. The bending strength of a molded product formed by mixing together 30 parts by mass of the hemihydrate gypsum after pulverization and 70 parts by mass of water was 0.55 N/mm².

### Comparative Example 2

50 parts by mass of raw material waste gypsum and 50 parts by mass of flue-gas desulfurization gypsum were mixed together and baked at 130°C for 2 hours to be converted to hemihydrate gypsum which was then pulverized to an average particle diameter of 10 µm by means of a ball mill. The oil absorption of this hemihydrate gypsum after pulverization was 62 mL/100g.

Although a molded product was to be formed by mixing together 50 parts by mass of the hemihydrate gypsum after pulverization and 50 parts by mass of water, the fluidity of slurry was insufficient and molding was impossible. Then, a molded product was formed by mixing together 40 parts by mass of the hemihydrate gypsum after pulverization and 60 parts by mass of water. The bending strength of this molded product was 0.90 N/mm².

## Claims

1. A method of manufacturing hemihydrate gypsum powders for the production of a gypsum molded product from gypsum board waste, comprising at least the following two steps in a random order:
a compression step for compressing gypsum obtained from gypsum board waste; and
a baking step for converting dihydrate gypsum obtained from gypsum board waste to hemihydrate gypsum.

2. The method according to claim 1, wherein compression pressure in the above compression step is a surface pressure of 100 MPa or more or a linear pressure of 20 kN/cm or more.

3. The method according to claim 1 or 2, wherein the oil absorption measured in accordance with JIS K5101-13-1 of the obtained hemihydrate gypsum powders is 65 mL/100 g or less.

4. The method according to any one of claims 1 to 3, comprising at least the following three steps in the mentioned order:
a compression step for compressing dihydrate gypsum obtained from gypsum board waste;
a mixing step for mixing the dihydrate gypsum after compression with dihydrate gypsum having an oil absorption measured in accordance with JIS K5101-13-1 of 40 mL/100 g or less; and
a baking step for converting the dihydrate gypsum mixture to hemihydrate gypsum.

5. The method according to any one of claims 1 to 3, comprising at least the following three steps in the mentioned order:
a baking step for converting dihydrate gypsum obtained from gypsum board waste to hemihydrate gypsum;
a compression step for compressing the hemihydrate gypsum after baking; and
a mixing step for mixing the hemihydrate gypsum after compression with hemihydrate gypsum having an oil absorption measured in accordance with JIS K5101-13-1 of 50 mL/100 g or less.

6. A method of manufacturing dihydrate gypsum powders for the production of a gypsum molded product from gypsum board waste, comprising at least the following step:
a compression step for compressing dihydrate gypsum obtained from gypsum board waste.
